(19) Europäisches Patentamt
European Patent Office
Office européen des brevets

(11) EP 3 828 781 A1

(12) **EUROPEAN PATENT APPLICATION**

(43) Date of publication:
02.06.2021 Bulletin 2021/22

(51) Int Cl.:
*G06N 5/02* (2006.01)   *G06N 20/00* (2019.01)
*G06N 3/02* (2006.01)

(21) Application number: 19212219.0

(22) Date of filing: 28.11.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(71) Applicant: 42 Maru Inc.
Seoul 08801 (KR)

(72) Inventors:
• KIM, Dong Hwan
Seoul 02087 (KR)
• JEONG, Woo Tae
Gyeonggi-do 13608 (KR)
• SOHN, Ah-rim
Seoul 03030 (KR)
• DO, Gangho
Seoul 08777 (KR)

(74) Representative: Mathys & Squire
Theatinerstraße 7
80333 München (DE)

(54) **METHOD AND APPARATUS FOR GENERATING QUESTION AND ANSWER DATASET BASED ON INPUT PARAGRAPH**

(57) A method of generating a question-answer dataset based on a passage input may include: generating a hidden representation for each word in the input passage and storing the hidden representation in a memory; sampling a latent variable based on the hidden representation; calculating importance of the hidden representation stored in the memory through an attention that uses the sampled latent variable as a query to generate a weighted sum vector; generating an answer span based on the latent variable and the weighted sum vector; and generating a question based on the answer span and an attention for the hidden representation in the memory.

FIG. 1

**Description**

BACKGROUND OF THE INVENTION

Field of the Invention

The present invention discloses a method and an apparatus of generating various datasets by simultaneously generating and sampling a question-answer pair that may be generated in one passage.

Description of the Related Art

Due to the recent development of technology, various question-answer systems using deep learning technology have been developed. Recently, a system that gives an answer appropriate for a question using a question-answer (QA) model when a user gives a question in a natural language to the system has been demonstrated. However, since such a deep learning-based QA model requires a large amount of learning data, it could not but automatically give only answers for some specific fields or topics. Furthermore, there was a problem that it takes a significant amount of time and cost to manually construct such learning data.

Citation List

Patent Literature

Patent Literature 1: Korean Patent No. 10-1605430 (published on March 22, 2016)

SUMMARY OF THE INVENTION

An object of the present invention is to provide a method and an apparatus of generating a question-answer generating model that simultaneously generates a question-answer dataset capable of being generated based on an input passage even though an answer candidate group is not provided unlike an existing question-answer (QA) model in which a user manually collects and learns a joint distribution of question-answer pairs, and a question-answer learning model capable of being automatically learned using the question-answer generating model.
According to an aspect of the present invention, a method of generating a question-answer dataset based on a passage input may include: generating a hidden representation for each word in the input passage and storing the hidden representation in a memory; sampling a latent variable based on the hidden representation; calculating importance of the hidden representation stored in the memory through an attention that uses the sampled latent variable as a query to generate a weighted sum vector; generating an answer span based on the latent variable and the weighted sum vector; and generating a question based on the answer span and an attention for the hidden representation in the memory.
The method may further include: storing a dataset of the generated question and an answer in the memory; and machine-learning a question-answer learning model using the stored data set of the question and the answer.
The method may further include: generating a latent variable which is valid and in which the question-answer learning model cannot guess a correct answer by adjusting a loss of the question-answer learning model and constraints; and performing adversarial machine learning using a dataset of a question and an answer generated using the generated latent variable.
The input passage may be generated by structuring infobox data extracted from data crawled from a website.
In a case where the infobox data is not extracted from the crawled data, a paragraph standardized based on a data frequency in a table recognized through column recognition may be input as the passage.
The input passage may be data for which machine translation is completed, and the method may further include evaluating a quality of the machine translation by evaluating accuracy of an answer based on a dataset of the generated question and the answer.
According to another aspect of the present invention, an apparatus of generating a question-answer dataset may include: one or more processors; and one or more memories in which instructions, when executed by the one or more processors, causing the one or more processors to perform an operation are stored, wherein the operation performed by the one or more processors includes: an operation of generating a hidden representation for each word in an input passage and storing the hidden representation in a memory; an operation of sampling a latent variable based on the hidden representation; an operation calculating importance of the hidden representation stored in the memory through an attention that uses the sampled latent variable as a query to generate a weighted sum vector; an operation of generating an answer span based on the latent variable and the weighted sum vector; and an operation of generating a question based on the answer span and an attention for the hidden representation in the memory.

**EP 3 828 781 A1**

The operation performed by the one or more processors may further include: an operation of storing a dataset of the generated question and an answer in the memory; and an operation of machine-learning a question-answer learning model using the stored data set of the question and the answer.

The operation performed by the one or more processors may further include: an operation of generating a latent variable which is valid and in which the question-answer learning model cannot guess a correct answer by adjusting a loss of the question-answer learning model and constraints; and an operation of performing adversarial machine learning using a dataset of a question and an answer generated using the generated latent variable.

According to another exemplary embodiment, a program stored in a medium in order to execute generation of a question-answer dataset based on a passage input in combination with a computer which is hardware is provided.

Detailed contents of other exemplary embodiments of the present invention are described in a detailed description and are illustrated in the accompanying drawings.

BRIEF DESCRIPTION OF THE DRAWINGS

FIG, 1 is a conceptual diagram for schematically describing a question-answer dataset generating model based on a passage input according to an exemplary embodiment.

FIG. 2 is a flowchart for describing a method of generating a question-answer dataset based on a passage input according to an exemplary embodiment.

FIG. 3 is a view for describing an example of a method of generating a question-answer dataset in a paragraph according to an exemplary embodiment.

FIG. 4 is a view for describing a method of generating a question-answer dataset in a standardized infobox according to an exemplary embodiment.

FIG. 5 is a flowchart for describing a method of generating a question-answer dataset in a non-standardized page according to an exemplary embodiment.

FIG. 6 is a view for describing a method of improving performance of a question-answer model through adversarial learning according to an exemplary embodiment.

FIG. 7 is a block diagram schematically illustrating an internal configuration of an apparatus of generating a question-answer dataset according to an exemplary embodiment.

DETAILED DESCRIPTION OF THE PREFERRED EMBODIMENTS

Various advantages and features of the present invention and methods accomplishing them will become apparent from the following description of exemplary embodiments with reference to the accompanying drawings. However, the present invention is not limited to exemplary embodiments to be described below, but may be implemented in various different forms, these exemplary embodiments will be provided only in order to make the present invention complete and allow those skilled in the art to completely recognize the scope of the present invention, and the present invention will be defined by the scope of the claims.

Terms used in the present disclosure are for describing exemplary embodiments rather than limiting the present invention. In the present disclosure, a singular form includes a plural form unless explicitly stated otherwise. Terms "comprise" and/or "comprising" used in the present disclosure do not exclude the existence or addition of one or more other components other than the mentioned components. Throughout the present disclosure, the same components will be denoted by the same reference numerals, and a term "and/or" includes each and all combinations of one or more of the mentioned components. Terms "first", "second" and the like are used to describe various components, but these components are not limited by these terms. These terms are used only in order to distinguish one component from another component. Therefore, a first component mentioned below may be a second component within the technical spirit of the present invention.

Unless defined otherwise, all terms (including technical and scientific terms) used in the present disclosure have the same meaning as meanings commonly understood by those skilled in the art to which the present invention pertains. In addition, terms defined in generally used dictionaries are not ideally or excessively interpreted unless they are specifically defined clearly.

Spatially relative terms "below", "beneath", "lower", "above", "upper", and the like, may be used in order to easily describe correlations between one component and other components. The spatially relative terms are to be understood as terms including different directions of the components at the time of use or at the time of operation in addition to directions illustrated in the drawings. For example, in a case of overturning component illustrated in the drawings, a component described as "below" or "beneath" another component may be placed "above" the other component. Therefore, an exemplary term "below" may encompass both of directions of above and below. Components may be oriented in other directions as well, and thus, spatially relative terms may be interpreted according to orientations.

Hereinafter, exemplary embodiments of the present invention will be described in detail with reference to the accompanying drawings.

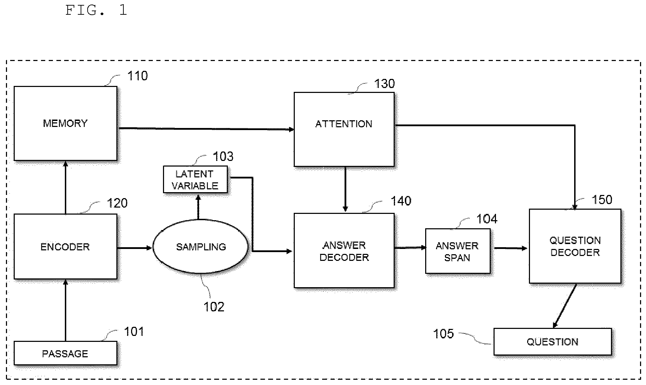

FIG. 1 is a conceptual diagram for schematically escribing a question-answer dataset generating model based on a passage input according to an exemplary embodiment.

Referring to FIG. 1, a question-answer dataset generating model according to an exemplary embodiment may include a memory 110, an encoder 120, an attention 130, an answer decoder 140, and a question decoder 150.

According to the method of generating a question-answer dataset according to an exemplary embodiment, a passage 101 including several sentences is input to the encoder 120 as it is. Here, the passage 101 may include a phrase, a part, a paragraph, and the like.

The encoder 120 generates a hidden representation for each word in the input paragraph 101 and stores the hidden representation in the memory 110. Here, the encoder 120 may construct the hidden representation from an input through a neural network. Therefore, the hidden representation may mean a machine-readable data representation learned in a hidden layer of the neural network, and may be composed of a pair of keys and values. For example, the encoder 120 may store information about a meaning represented by a component (for example, a word) of a sentence as the hidden representation.

Next, the encoder 120 performs sampling 102 based on the hidden representation to generate a latent variable 103, and the generated latent variable 103 is input to the answer decoder 140.

The answer decoder 140 calculates the importance of each component of the memory 110 through the attention 130 that uses the latent variable 103 as a query to generate a weighted sum vector of the memory 110. For example, each time the answer decoder 140 predicts an output word through the attention 130, the answer decoder 140 may refer to an entire input sentence in the encoder 120 once again. However, the answer decoder 140 does not refer to the entire input sentence in the same ratio, but may attentively refer to an input word portion associated with a word to be predicted at a corresponding time. Therefore, an attention function obtains similarities to 'Keys' obtained from all the hidden representations with respect to given 'Queries'. In addition, the obtained similarities are reflected in the respective 'values' mapped to the keys. In addition, a weighted sum vector may be obtained by adding all the values in which the similarities are reflected.

The answer decoder 140 predicts an answer span 104 based on the weighted sum vector. Here, the answer span may mean a start point and an end point where an answer is positioned in the input passage.

Next, the question decoder 150 may receive the previously generated answer span 104, and perform calculation of the attention 130 of the memory 110 to finally generate the question 105.

A question-answer dataset composed of a pair of the generated question and an answer according to an exemplary embodiment may be stored in the memory 110, and the stored question-answer dataset may be used to machine-learn a question-answer learning model.

Therefore, the dataset generating model according to an exemplary embodiment automatically generates a dataset of a question and an answer from the input passage, and may thus sample several question-answer pairs with only one passage input, thereby constructing more diverse data as compared with an existing manual input model.

Hereinafter, a method of generating a question-answer dataset based on a passage input according to an exemplary embodiment will be described in more detail.

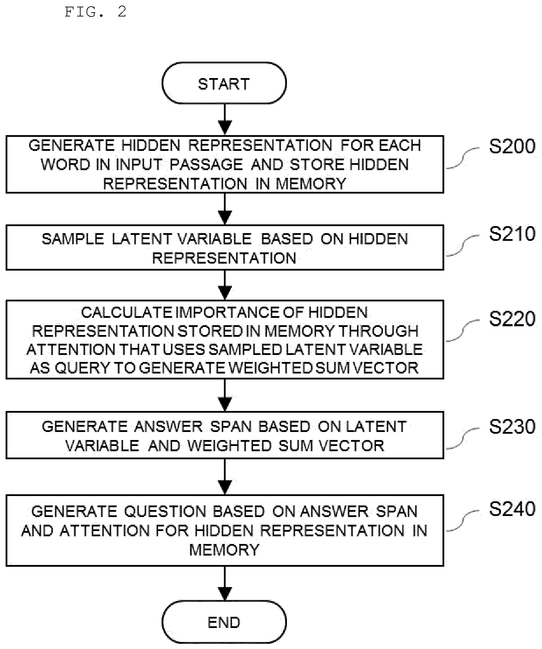

FIG. 2 is a flowchart for describing a method of generating a question-answer dataset based on a passage input according to an exemplary embodiment.

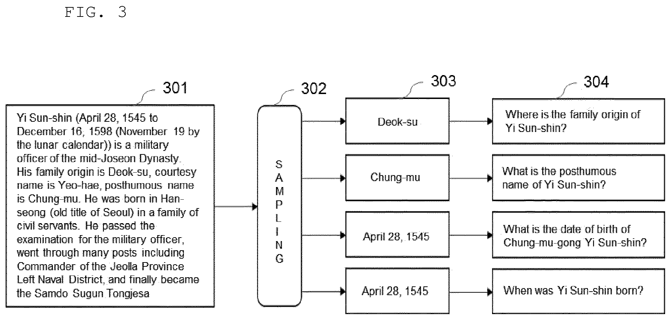

In step S200, the method for generating a question-answer dataset according to an exemplary embodiment generates a hidden representation for each word in an input passage and stores the hidden representation in the memory. Here, the input passage may be generated by structuring infobox data extracted from data crawled from a website. Alternatively, in a case where the infobox data is not extracted from the crawled data, a paragraph standardized based on a data frequency in a table recognized through column recognition may be input as the passage. Furthermore, if the input passage is data for which machine translation is completed, a quality of the machine translation may be evaluated by evaluating accuracy of the answer based on the generated question-answer dataset. A specific input passage will be described later with reference to FIGS. 3 to 4.

In step S210, the method of generating a question-answer dataset according to an exemplary embodiment samples a latent variable based on the hidden representation.

In step S220, the method of generating a question-answer dataset according to an exemplary embodiment generates a weighted sum vector by calculating the importance of the hidden representation stored in the memory through an attention that uses the sampled latent variable as a query.

In step S230, the method of generating a question-answer dataset according to an exemplary embodiment generates an answer span based on the latent variable and the weighted sum vector.

In step S240, the method of generating a question-answer dataset according to an exemplary embodiment generates a question based on the answer span and the attention for the hidden representation in the memory. Here, a dataset of the generated question and an answer may be stored in the memory. Furthermore, a question-answer model may be machine-learned using the stored dataset of the question and the answer. In addition, an adversarial question for adversarial machine learning is also automatically generated from the input passage, such that that the question-answer model may be machine-learned to be closer to a real boundary.

More specifically, the method for generating a question-answer dataset described above may be implemented through an objective function shown in the following Equation 1:

[Equation 1]

$$\mathcal{L}_{\theta,\phi,\psi}(\mathbf{x},\mathbf{y},\mathbf{c}) = \mathbb{E}_{\mathbf{x},\mathbf{y},\mathbf{c}\sim p(\mathbf{x},\mathbf{y},\mathbf{c})}[\mathbb{E}_{\mathbf{z}\sim q_\phi(\mathbf{z}|\mathbf{x},\mathbf{y},\mathbf{c})}[-logp_\theta(\mathbf{y}|\mathbf{z},\mathbf{c}) - logp_\theta(\mathbf{x}|\mathbf{z},\mathbf{y},\mathbf{c})]]$$
$$+ D_{\mathrm{KL}}[q_\phi(\mathbf{z})\|p_\psi(\mathbf{z})]$$

Here x, y, c, and z correspond to a question, an answer, a paragraph, and a latent variable, respectively. $q_\phi(z|x,y,c)$ is a function used for the encoder of the question-answer model, and $p_\theta(y|z,c), p_\theta(x|z,y,c)$ are functions used for the answer decoder and the question decoder, respectively. $p_\psi(z)$ is a marginal prior distribution of the latent variables, and $q_\phi(z)$ is a marginal posterior distribution of the latent variables. For example, $q_\phi(z)$ may generate a distribution of latent variables generated from the input, and $p_\psi(z)$ may generate an output close to the input using latent variables. Meanwhile, since it is very difficult to calculate a Kullback-Leibler (KL) divergence for optimization (for reducing a difference between the two distributions described above), it may be approximated as represented by the following Equation 2:

[Equation 2]

$$q_\phi(\mathbf{z}) \approx \frac{1}{N} \sum_{n=1}^{N} q_\phi(\mathbf{z}|\mathbf{x}_n, \mathbf{y}_n, \mathbf{c}_n)$$

$$p_\psi(\mathbf{z}) \approx \frac{1}{N} \sum_{n=1}^{N} p_\psi(\mathbf{z}|\mathbf{c}_n)$$

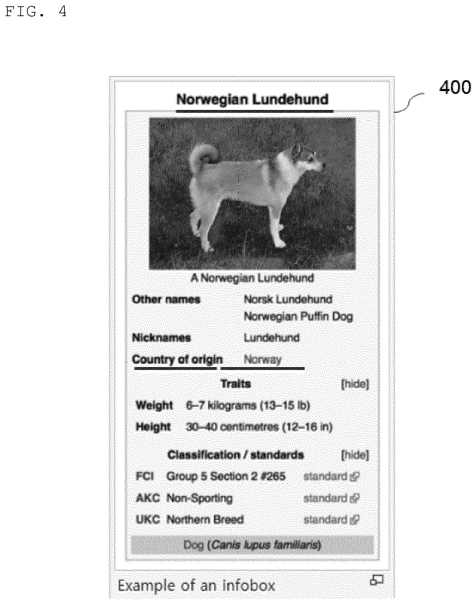

Meanwhile, how the passage input is performed and how a question-answer dataset construction model according to an exemplary embodiment may be utilized will be described with reference to FIGS. 3 and 4.

FIG. 3 is a view for describing an example of a method of generating a question-answer dataset in a paragraph according to an exemplary embodiment.

Referring to FIG. 3, when a paragraph 301 is input, an answer 303 is first generated through sampling 302. In addition, an answer 304 paired with the answer may be generated using the generated answer 303.

For example, in a case where there is a sentence "Yi Sun-shin (April 28, 1545 to December 16, 1598 (November 19 by the lunar calendar)) is a military officer of the mid-Joseon Dynasty" in an input passage, an answer "April 28, 1545" may be first generated through sampling. In addition, various types of questions such as "When was Admiral Yi Sun-shin's birthday?" Or "When was Yi Sun Shin born?" may be generated based on the answer generated according to the method for generating a question-answer dataset according to an exemplary embodiment. Therefore, in a case of using the question-answer generating model, various datasets for machine-learning the question-answer model may be constructed.

FIG. 4 is a view for describing a method of generating a question-answer dataset in a standardized infobox according to an exemplary embodiment.

Referring to FIG. 4, the question-answer dataset generating model according to an exemplary embodiment may obtain infobox data 400 through crawling from a website famous as an online knowledge encyclopedia website.

Particularly, since the infobox data 400 is standardized, the infobox data 400 may be easily structured in a form of a corpus of questions and answers, and since these knowledge encyclopedia websites provide detailed classification data for fields or targets, an input passage may be generated in a preprocessing step so as to generate and machine-learn a question-answer by targeting a desired field.

However, since all websites do not provide the standardized infobox data 400 as illustrated in FIG. 4, crawled data is generally non-standardized. Therefore, in this case, how to create a passage to be input will be described.

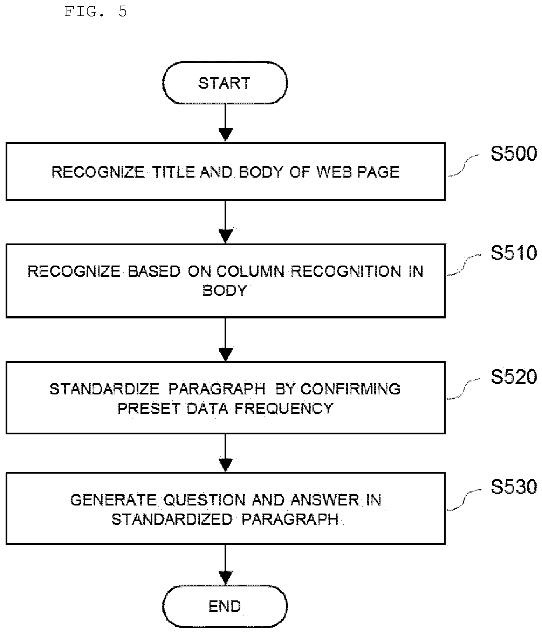

FIG. 5 is a flowchart for describing a method of generating a question-answer dataset in a non-standardized page according to an exemplary embodiment.

Referring to FIG. 5, in step S500, the question-answer dataset construction model recognizes the title and the body of a web page from crawled data. In addition, in step S510, a table is recognized based on column recognition in the body. That is, the table is recognized in order to obtain data having a form similar to an infobox that may be obtained from the standardized site.

Then, in step S520, a paragraph is standardized by confirming whether or not there is a word satisfying a preset data frequency. For example, words that appear repeatedly, such as "country name" and "capital" may be confirmed, and the paragraph may be standardized based on these words.

In step S530, the question-answer dataset generating model may receive the standardized paragraph and generate a question-answer dataset to construct a dataset of various questions and answers in a dataset provided in an information box provided in a standardized form or a dataset provided in a table form on an existing website.

The question-answer dataset generating model described above according to another exemplary embodiment may extract a question-answer dataset from data for which learning and machine translation is completed, evaluate accuracy of an answer corresponding to the question, and utilize an evaluation result to verify a quality of learning or translation, beyond simply generating the question-answer dataset.

For example, if the question-answer dataset generating model according to an exemplary embodiment can generate a correct question-answer dataset from the data for which the machine translation is completed, it may be evaluated that machine reading is well performed.

Meanwhile, in a case of a recent question-answer learning model, performance is already significantly high because a preliminary training is performed using a language model objective or the like in a large amount of corpus. Therefore, even though more data are simply used for learning, performance of the question-answer model are not dramatically improved. Particularly, since most of question-answer pairs automatically generated through the question-answer dataset generating model according to an exemplary embodiment may already be guessed by the question-answer learning model, they may not be very helpful. Therefore, a method for improving performance of machine-learning is required.

Therefore, a question-answer dataset generating model according to another exemplary embodiment discloses a method of generating a question-answer dataset that cannot be guessed by the current question-answer learning model through adversarial learning.

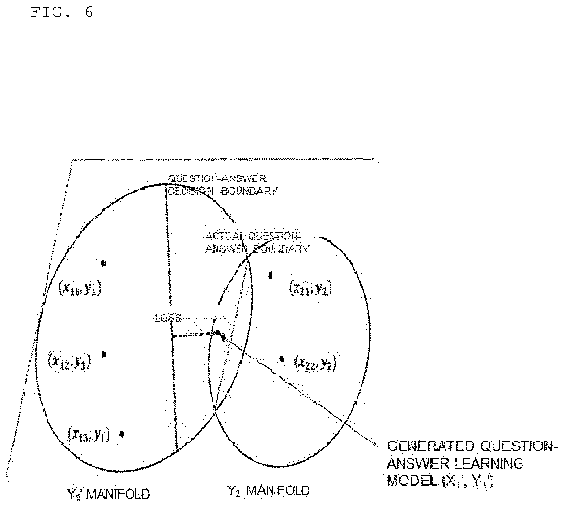

FIG. 6 is a view for describing a method of improving performance of a question-answer model through adversarial learning according to an exemplary embodiment.

Referring to FIG. 6, in order to perform adversarial learning, data present in a data manifold while being outside a decision boundary of the current question-answer model need to be sampled. Specifically, the method of generating a question-answer dataset based on a passage input according to an exemplary embodiment selects the latent variable through the encoder, and a question-answer data pair generated from the sampled latent variable needs to be a question-answer data pair whose correct answer cannot be guessed through a question-answer learning model. In this case, the question-answer learning model calibrates a decision boundary by learning the question-answer data pair whose correct answer could not be guessed, and when such a process is repeated, the decision boundary of the question-answer learning model may become close to a true decision boundary, and performs of the question-answer learning model may also be improved.

Meanwhile, referring to FIG. 6, a question-answer dataset for the adversarial learning may be determined by adjusting a loss of the question-answer learning model and constraints for positioning the latent variable in the data manifold.

For example, the question-answer learning model in the adversarial manner described above may have an objective function of the following Equation 3:

[Equation 3]

$$\min_{\omega} \max_{\pi} \quad \mathbb{E}_{\mathbf{x},\mathbf{y},\mathbf{c}\sim p(\mathbf{x},\mathbf{y},\mathbf{c})}[\mathcal{L}_{\omega}(\mathbf{x},\mathbf{y},\mathbf{c})] + \mathbb{E}_{\mathbf{c}_u\sim p_u(\mathbf{c})}[\mathcal{L}_{\omega}(\mathbf{x}_u,\mathbf{y}_u,\mathbf{c}_u) - D_{\mathrm{KL}}[p_{\pi}(\mathbf{z}|\mathbf{c}_u)\|p_{\psi}(\mathbf{z}|\mathbf{c}_u)]]$$

$$\text{s.t.} \quad \mathbf{z}\sim p_{\pi}(\mathbf{z}|\mathbf{c}_u),\ \mathbf{x}_u,\mathbf{y}_u\sim p_{\theta}(\mathbf{x},\mathbf{y}|\mathbf{z},\mathbf{c}_u)$$

Here x, y, c, and z correspond to a question, an answer, a paragraph, and a latent variable, respectively. $q_{\pi}(\mathbf{z}|\mathbf{c})$ is a function used for a pre-processor of the question-answer model, $p_{\pi}(\mathbf{z}|\mathbf{c})$ is a function used for an agent, and $p_{\theta}(\mathbf{y}|\mathbf{z},\mathbf{c})$, $p_{\theta}(\mathbf{x}|\mathbf{z},\mathbf{y},\mathbf{c})$ are functions used for the answer decoder and the question decoder, respectively.

Meanwhile, the encoder samples the latent variable (z), and a question and a correct answer generated from the sampling need to increase a loss ($\mathcal{L}_a$) of the question-answer model. However, since there may be no relationship between the question and the correct answer generated as such, constraints are required in selecting z. That is, as z becomes distant from the previously learned distribution of z, an invalid question-answer pair is generated. Therefore, in order to prevent this problem, a value may be adjusted in such a manner that a penalty is given when a distance between the two distributions becomes distant (for example, use a KL divergence).

Therefore, the question-answer learning model according to an exemplary embodiment may generate a latent variable which is valid and in which the question-answer learning model cannot guess a correct answer by adjusting the loss and the constraints.

In addition, performance of the question-answer earning model may be improved by performing adversarial machine learning using a dataset of an adversarial question and answer generated using the generated latent variable.

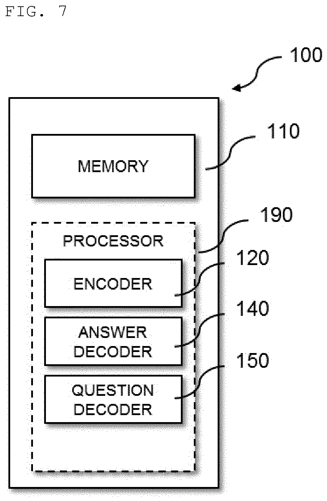

FIG. 7 is a block diagram schematically illustrating an internal configuration of an apparatus of generating a question-answer dataset according to an exemplary embodiment.

Referring to FIG. 7, an apparatus 100 of generating a question-answer dataset according to an exemplary embodiment may include one or more memories 110 and a processor 190. Operations of the apparatus 100 of generating a question-answer dataset may be performed by executing a program stored in the memory 110 through the processor 190.

The processor 190 according to an exemplary embodiment performs an operation of generating a hidden representation for each word in the input passage and storing the hidden representation in the memory 110.

In addition, the processor 190 samples a latent variable based on the hidden representation, and calculates the importance of the hidden representation stored in the memory through an attention that uses the sampled latent variable as a query to generate a weighted sum vector.

In addition, the processor 190 may perform an operation of generating an answer span based on the latent variable and the weighted sum vector and generating a question based on the generated answer span and the attention for the hidden representation in the memory.

In addition, the processor 190 may further perform an operation of storing a dataset of the generated question and an answer in the memory 110 and a machine learning operation of machine-learning a question-answer learning model using the stored dataset of the question and the answer.

In addition, the processor 19 may further perform an operation of generating a latent variable which is valid and in which the question-answer learning model cannot guess a correct answer by adjusting the loss of the question-answer learning model and the constraints and an operation of performing adversarial machine learning using the question-answer dataset generated using the generated latent variable.

Meanwhile, the apparatus 100 of generating a question-answer dataset described above may include one or more processors 190 and/or one or more memories 110. In addition, each of the processors 190 may include an encoder 120, an answer decoder 140, and a question decoder 150, and may perform the operations described above with reference to FIGS 1 to 7 on each of the encoder 120, answer decoder 150, and question decoder 150.

In addition, the memory 110 may include a volatile and/or nonvolatile memory. The one or more memories 110 may store instructions that, when executed by the one or more processors 190, cause the one or more processors 190 to perform an operation. In the present disclosure, the program or the instruction, which is software stored in the memory 110, may include an operating system for controlling resources of a server, an application, and/or middleware that provides various functions to the application so that the application may utilize the resources of the apparatus.

The one or more processors 190 may drive software (for example, programs, instructions) to control at least one component of the apparatus 100 connected to the processors 190. In addition, the processor 190 may perform operations such as various operations, processing, data generation, and processing related to the present disclosure. In addition, the processor 190 may load data or the like from the memory 110 or store the data or the like in the memory 110.

In an exemplary embodiment, at least one of the components of the apparatus 100 may be omitted or another component may be added. Additionally or alternatively, some of the components may be implemented in an integrated form or be implemented as singular or plural entities.

Meanwhile, the steps of the method or the algorithm described in connection with an exemplary embodiment of the present invention may be implemented directly by hardware, by a software module executed by hardware, or by a combination of hardware and software. The software module may reside on a random access memory (RAM), a read only memory (ROM), an erasable programmable ROM (EPROM), an electrically erasable programmable ROM (EEPROM), a flash memory, a hard disk, a removable disk, a compact disk (CD)-ROM, or may reside on any type of computer extractable recording medium well-known in the art.

According to an exemplary embodiment, a dataset of a question and an answer is automatically generated from an input passage, and several question-answer pairs may thus be sampled with only one passage input, thereby constructing more diverse data as compared with an existing model.

In addition, a dataset of various questions and answers may be constructed in a dataset provided in an information box provided in a standardized form or a dataset provided in a table form on an existing website.

Furthermore, since the method of generating a question-answer dataset according to an exemplary embodiment extracts a question-answer dataset from data for which learning or machine translation is completed, thus it may be utilized to verify a quality of the learning or the translation by evaluating accuracy of an answer corresponding to a question.

Effects of the present invention are not limited to the effects described above, and other effects that are not mentioned may be obviously understood by those skilled in the art from the following description.

Although the exemplary embodiments of the present invention have been described with reference to the accompanying drawings, those skilled in the art will understand that various modifications and alterations may be made without departing from the spirit or essential feature of the present invention. Therefore, it is to be understood that the exemplary embodiments described hereinabove are illustrative rather than being restrictive in all aspects.

**Claims**

1. A method of generating a question-answer dataset based on a passage input, comprising:

   generating a hidden representation for each word in the input passage and storing the hidden representation in a memory;
   sampling a latent variable based on the hidden representation;
   calculating importance of the hidden representation stored in the memory through an attention that uses the sampled latent variable as a query to generate a weighted sum vector;
   generating an answer span based on the latent variable and the weighted sum vector; and
   generating a question based on the answer span and an attention for the hidden representation in the memory.

2. The method of claim 1, further comprising:

   storing a dataset of the generated question and an answer in the memory; and
   machine-learning a question-answer learning model using the stored data set of the question and the answer.

3. The method of claim 2, wherein:

   generating a latent variable which is valid and in which the question-answer learning model cannot guess a correct answer by adjusting a loss of the question-answer learning model and constraints; and
   performing adversarial machine learning using a dataset of a question and an answer generated using the generated latent variable.

4. The method of claim 1, wherein:
   the input passage is generated by structuring infobox data extracted from data crawled from a website.

5. The method of claim 4, wherein
   in a case where the infobox data is not extracted from the crawled data, a paragraph standardized based on a data frequency in a table recognized through column recognition is input as the passage.

6. The method of claim 1, wherein:

   the input passage is data for which machine translation is completed,
   the method further comprising evaluating a quality of the machine translation by evaluating accuracy of an answer based on a dataset of the generated question and the answer.

7. An apparatus of generating a question-answer dataset, comprising:

   one or more processors; and
   one or more memories in which instructions, when executed by the one or more processors, causing the one or more processors to perform an operation are stored,
   wherein the operation performed by the one or more processors includes:

      an operation of generating a hidden representation for each word in an input passage and storing the hidden representation in a memory;
      an operation of sampling a latent variable based on the hidden representation;
      an operation calculating importance of the hidden representation stored in the memory through an attention that uses the sampled latent variable as a query to generate a weighted sum vector;
      an operation of generating an answer span based on the latent variable and the weighted sum vector; and
      an operation of generating a question based on the answer span and an attention for the hidden representation in the memory.

8. The apparatus of generating a question-answer dataset of claim 7, wherein the operation performed by the one or more processors further includes:

an operation of storing a dataset of the generated question and an answer in the memory; and
an operation of machine-learning a question-answer learning model using the stored data set of the question and the answer.

9. The apparatus of generating a question-answer dataset of claim 8, wherein the operation performed by the one or more processors further includes:

an operation of generating a latent variable which is valid and in which the question-answer learning model cannot guess a correct answer by adjusting a loss of the question-answer learning model and constraints; and
an operation of performing adversarial machine learning using a dataset of a question and an answer generated using the generated latent variable.

10. A program for generating a question-answer dataset based on a passage input, stored in a medium in order to execute the method of any one of claims 1 to 6 in combination with a computer which is hardware.

FIG. 1

FIG. 2

```
                    ┌──────────────┐
                    │    START     │
                    └──────┬───────┘
                           ▼
    ┌──────────────────────────────────────────┐
    │  GENERATE HIDDEN REPRESENTATION FOR EACH │      S200
    │  WORD IN INPUT PASSAGE AND STORE HIDDEN  │
    │      REPRESENTATION IN MEMORY            │
    └──────────────────┬───────────────────────┘
                       ▼
    ┌──────────────────────────────────────────┐
    │   SAMPLE LATENT VARIABLE BASED ON HIDDEN │      S210
    │          REPRESENTATION                  │
    └──────────────────┬───────────────────────┘
                       ▼
    ┌──────────────────────────────────────────┐
    │    CALCULATE IMPORTANCE OF HIDDEN        │
    │ REPRESENTATION STORED IN MEMORY THROUGH  │      S220
    │ ATTENTION THAT USES SAMPLED LATENT VARIABLE │
    │ AS QUERY TO GENERATE WEIGHTED SUM VECTOR │
    └──────────────────┬───────────────────────┘
                       ▼
    ┌──────────────────────────────────────────┐
    │  GENERATE ANSWER SPAN BASED ON LATENT    │      S230
    │   VARIABLE AND WEIGHTED SUM VECTOR       │
    └──────────────────┬───────────────────────┘
                       ▼
    ┌──────────────────────────────────────────┐
    │ GENERATE QUESTION BASED ON ANSWER SPAN   │      S240
    │ AND ATTENTION FOR HIDDEN REPRESENTATION IN │
    │             MEMORY                       │
    └──────────────────┬───────────────────────┘
                       ▼
                 ┌──────────────┐
                 │     END      │
                 └──────────────┘
```

FIG. 3

~ 301

Yi Sun-shin (April 28, 1545 to December 16, 1598 (November 19 by the lunar calendar)) is a military officer of the mid-Joseon Dynasty. His family origin is Deok-su, courtesy name is Yeo-hae, posthumous name is Chung-mu. He was born in Han-seong (old title of Seoul) in a family of civil servants. He passed the examination for the military officer, went through many posts including Commander of the Jeolla Province Left Naval District, and finally became the Samdo Sugun Tongjesa

~ 302

S
A
M
P
L
I
N
G

~ 303

| Deok-su |
| Chung-mu |
| April 28, 1545 |
| April 28, 1545 |

~ 304

| Where is the family origin of Yi Sun-shin? |
| What is the posthumous name of Yi Sun-shin? |
| What is the date of birth of Chung-mu-gong Yi Sun-shin? |
| When was Yi Sun-shin born? |

FIG. 4

400

**Norwegian Lundehund**

A Norwegian Lundehund

| Other names | Norsk Lundehund |
| --- | --- |
| | Norwegian Puffin Dog |
| Nicknames | Lundehund |
| Country of origin | Norway |

| Traits | | [hide] |
| --- | --- | --- |
| Weight | 6–7 kilograms (13–15 lb) | |
| Height | 30–40 centimetres (12–16 in) | |

| Classification / standards | | [hide] |
| --- | --- | --- |
| FCI | Group 5 Section 2 #265 | standard |
| AKC | Non-Sporting | standard |
| UKC | Northern Breed | standard |

Dog (*Canis lupus familiaris*)

Example of an infobox

FIG. 5

```
                    ┌──────────┐
                    │  START   │
                    └────┬─────┘
                         │
                         ▼
    ┌───────────────────────────────────────────┐        S500
    │   RECOGNIZE TITLE AND BODY OF WEB PAGE     │
    └───────────────────────┬───────────────────┘
                            │
                            ▼
    ┌───────────────────────────────────────────┐        S510
    │   RECOGNIZE BASED ON COLUMN RECOGNITION IN │
    │                  BODY                      │
    └───────────────────────┬───────────────────┘
                            │
                            ▼
    ┌───────────────────────────────────────────┐        S520
    │   STANDARDIZE PARAGRAPH BY CONFIRMING      │
    │        PRESET DATA FREQUENCY               │
    └───────────────────────┬───────────────────┘
                            │
                            ▼
    ┌───────────────────────────────────────────┐        S530
    │   GENERATE QUESTION AND ANSWER IN          │
    │        STANDARDIZED PARAGRAPH              │
    └───────────────────────┬───────────────────┘
                            │
                            ▼
                    ┌──────────┐
                    │   END    │
                    └──────────┘
```

FIG. 6

QUESTION-ANSWER
DECISION BOUNDARY

ACTUAL QUESTION-
ANSWER BOUNDARY

$(x_{11}, y_1)$

$(x_{21}, y_2)$

LOSS

$(x_{12}, y_1)$

$(x_{22}, y_2)$

$(x_{13}, y_1)$

GENERATED QUESTION-
ANSWER LEARNING
MODEL $(X_1', Y_1')$

$Y_1'$ MANIFOLD

$Y_2'$ MANIFOLD

FIG. 7

Europäisches
Patentamt

European
Patent Office

Office européen
des brevets

# EUROPEAN SEARCH REPORT

**Application Number**

EP 19 21 2219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VISHWAJEET KUMAR ET AL: "Automating Reading Comprehension by Generating Question and Answer Pairs", ARXIV.ORG, CORNELL UNIVERSITY LIBRARY, 201 OLIN LIBRARY CORNELL UNIVERSITY ITHACA, NY 14853, 7 March 2018 (2018-03-07), XP080863241, * abstract * * Sections 1, 2, 4-7 * | 1-10 | INV. G06N5/02 G06N20/00 G06N3/02 |
| X | VISHWAJEET KUMAR ET AL: "A Framework for Automatic Question Generation from Text using Deep Reinforcement Learning", ARXIV.ORG, CORNELL UNIVERSITY LIBRARY, 201 OLIN LIBRARY CORNELL UNIVERSITY ITHACA, NY 14853, 15 August 2018 (2018-08-15), XP081454729, * abstract * * sections 1, 2, 5 * | 1-10 | |
| X | VISHWAJEET KUMAR ET AL: "Putting the Horse Before the Cart:A Generator-Evaluator Framework for Question Generation from Text", ARXIV.ORG, CORNELL UNIVERSITY LIBRARY, 201 OLIN LIBRARY CORNELL UNIVERSITY ITHACA, NY 14853, 15 August 2018 (2018-08-15), XP081491542, * abstract * * sections 1, 2 * | 1-10 | TECHNICAL FIELDS SEARCHED (IPC) G06N G06F |

The present search report has been drawn up for all claims

| Place of search | Date of completion of the search | Examiner |
|---|---|---|
| The Hague | 29 May 2020 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 828 781 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101605430